# EUROPÄISCHE PATENTSCHRIFT

(11) **EP 0 607 840 B1**
(45) Veröffentlichungstag und Bekanntmachung des Hinweises auf die Patenterteilung: **16.04.1997**
(21) Anmeldenummer: 94100289.1
(22) Anmeldetag: 11.01.1994
(51) Int. Cl.: C01F 11/18, C09C 1/02

(54) **Verfahren zur Herstellung von Carbonaten durch Nassvermahlung**
Process for the preparation of carbonates by wet-grinding
Procédé pour préparation des carbonates par broyage humide

(30) Priorität: 19.01.1993 DE 4301257
(43) Veröffentlichungstag der Anmeldung: 27.07.1994
(73) Patentinhaber: Plüss-Staufer AG, 4665 Oftringen (CH)
(72) Erfinder: Strauch, Dieter, CH-4800 Zofingen (CH); Belger, Peter, CH-4812 Mühlethal (CH)
(74) Vertreter: Reinhard - Skuhra - Weise & Partner

(56) Entgegenhaltungen:
- EP-A- 0 027 996
- EP-A- 0 143 363
- EP-A- 0 323 697
- DE-A- 3 215 890
- FR-A- 1 506 724
- FR-A- 2 480 771
- US-A- 4 793 985
- US-A- 5 007 964
- US-E- R E23 794

## Beschreibung

Die vorliegende Erfindung betrifft ein Verfahren zur Herstellung von natürlichen und/oder synthetischen Carbonaten, insbesondere Calciumcarbonaten, mit sehr hoher spezifischer Oberflache von über 20 m²/g nach BET/N₂, insbesondere von 20-50 m²/g nach BET/N₂ unter Verwendung einer an sich bekannten Mühle, insbesondere Rührwerkskugelmühle, durch Naßvermahlung.

Die Naßvermahlung von Carbonaten ist bereits seit langem bekannt. Diese Naßvermahlung ist ein Mahlvorgang unter Verwendung einer Flüssigkeit als Trägermedium, also eine Vermahlung in flüssiger Suspension. Die Naßvermahlung erfordert allgemein für die gleiche Mahlgutmenge einen geringeren Energieaufwand, da die höhere Zähigkeit der Flüssigkeit gegenüber Luft als Trägermedium günstigere Verhältnisse der Kraftübertragung auf die zu mahlenden Teilchen schafft. Gleichzeitig bietet die Naßvermahlung den Vorteil staubfreier Vermahlung.

Die hierfür erforderlichen Mühlen, insbesondere Rührwerkskugelmühlen, sind ebenfalls bereits allgemein bekannt. Sie bestehen normalerweise aus einem entweder vertikal oder horizontal angeordneten, zylindrischen Mahlbehälter mit axial schnellaufender Rührwelle, die mit mehreren Rührarmen oder Rührscheiben ausgerüstet ist. Der Mahlbehälter ist mit Sandkörnern, Stahl- oder Steatitkugeln oder ähnlichen Mahlkörpern von Abmessungen zwischen einigen Zehnteln bis einigen Millimetern gefüllt. Die Mahlgutsuspension durchströmt den Mahlraum stetig von unten nach oben bzw. von vorne nach hinten und wird durch Druck- und Scherbeanspruchung zwischen den vom Rührer aufgewirbelten Mahlkörpern zerrieben. Der schnellaufende Rührer ist in der Achse angeordnet. Im oberen Teil bzw. im hinteren Teil verhindert ein Sieb oder ein Spalt das Austreten der Mahlkörper. Die Mahlfeinheit hängt ab von der Mahlkörperart und vom Füllungsgrad, vom Durchmesserverhältnis Mahlkörper zu Teilchengröße des Mahlgutes, von der Mahlgutart, der Art der Rührelemente und der mittleren Verweilzeit der Suspension im Mahlraum.

Aus der US-2,323,550, insbesondere Zeichnung, ist es bereits bekannt, die Übergrößen von dem die Kugelmühle verlassenden Produkt in die Kugelmühle zurückzuführen mit dem Ziel, Produkte mit der gewünschten spezifischen Oberfläche, von z.B. 20.000 square feet per pound (vgl. dort Seite 4, Zeilen 41, 42) zu erreichen. Dabei wird jedoch nur der Teil der Suspension zurückgeführt, der die angestrebte Teilchengröße noch nicht erreicht hat. Es handelt sich also nicht um eine eigentliche Kreislaufvermahlung. Der Feststoffgehalt der Suspension liegt bei diesem Verfahren zwischen 30 und 35 % (Seite 6, rechte Spalte, Zeilen 51-52).

Aus der europäischen Patentschrift 83112004.3 (Veröffentlichungsnummer 0 115 586) ist ebenfalls bereits ein Verfahren zum Naßvermahlen von natürlichen und/oder synthetischen Carbonaten bekannt. In Spalte 1, Zeilen 8 ff. dieser Druckschrift wird im Einklang mit dem allgemeinen Fachwissen empfohlen, den Feststoffgehalt in der wäßrigen Carbonat-Suspension möglichst hoch zu halten, um eine gute Mahlwirkung zu erreichen.

Aus der GB-1,123,219 und der GB-1,309,074 ist es bereits bekannt, eine wäßrige Calciumcarbonatsuspension zu vermahlen, die einen Feststoffgehalt von mindestens 25 Gew.% aufweist.

Die EP-A-27996 beschreibt die Zerkleinerung von Calciumcarbonat durch Naßmahlung ohne Dispergiermittel und bei einer Feststoffkonzentration von unter 60 Gew.% (Seite 4, Zeilen 3-10). Der Wert der Feststoffkonzentration wird dabei gewählt abhängig vom gewünschten Verhältnis %-Teilchen < 1 µm/%-Teilchen < 0,2 m (Seite 4, Zeilen 12-17). Die Feststoffkonzentration kann also zwischen 25% und 60% an Feststoffen liegen (Seite 6, Zeile 28). Die Suspension wird erhalten durch Mahlung in einer mit Mikroelementen gefüllten Zerkleinerungsvorrichtung, wobei diskontinuierlich im Kreislauf (bis zum Gehalt der gewünschten Feinheit) gearbeitet wird (Seite 6, Zeilen 29-33).

Aus der US-A-5 007 964 sind bereits Calciumcarbonate mit einer spezifischen Oberfläche von 25-55 m²/g (BET) bekannt. Aus dieser Druckschrift ist es weiterhin bekannt, derartige Calciumcarbonate in der Papierindustrie einzusetzen.

Aufgabe der vorliegenden Erfindung ist es, Carbonate, insbesondere natürliche Calciumcarbonate herzustellen, die eine sehr hohe spezifische Oberfläche nach BET/N₂ von über 20 m²/g, insbesondere von 20-50 m²/g aufweisen.

Diese Aufgabe wird erfindungsgemäß dadurch gelöst, daß die Naßvermahlung im Kreislauf durch Rückführung des gesamten die Mühle verlassenden Produkts in die Mühle so oft durchgeführt wird, bis das Endprodukt mit der gewünschten spezifischen Oberfläche erreicht ist, und daß die Feststoffkonzentration während der gesamten Dauer der Naßvermahlung kleiner oder gleich 24 Gew.% beträgt und daß die Vermahlung gegebenenfalls in Anwesenheit von Dispergiermitteln durchgeführt wird.

Vorzugsweise beträgt die Feststoffkonzentration 10-24 Gew.%.

Vorzugsweise wird die Vermahlung ohne Dispergiermittel durchgeführt. Allerdings können erfindungsgemäß auch Dispergiermittel eingesetzt werden. Die Verwendung von Dispergiermitteln läßt aufgrund niedriger Viskosität eine längere Mahldauer zu. Dadurch ist es möglich, spezifische Oberflächen von über ca. 40 m²/g zu erzielen.

Im Gegensatz zu den Empfehlungen der Fachwelt wird erfindungsgemäß nur eine sehr kleine Feststoffkonzentration von ≤ 24 Gew.%, vorzugsweise von 22, von 20, von 18, von 16, oder sogar nur von 12 Gew.% verwendet. Im Gegensatz zum obigen Stande der Technik wird außerdem die gesamte vermahlene und entnommene Suspension wieder eingespeist, d.h. nicht nur ein Teil derselben.

Das erfindungsgemäße Verfahren, bei welchem die Vermahlung im Kreislauf durch Rückführung des gesamten die Mühle verlassenden Produkts durchgeführt wird, unterscheidet sich von dem Verfahren nach der EP-A-27996 dadurch, daß bei diesem diskontinuierlich gearbeitet wird, bis die gewünschte Feinheit erreicht ist. Mit diesem Verfahren werden Feinstteilchen bei der Herstellung vermieden (siehe Seite 3, Zeilen 28-30). Die Endprodukte haben deshalb im Gegensatz zu den Endprodukten, die beim erfindungsgemäßen Verfahren erhalten werden, niedrige spezifische Oberflächen.

Weitere Vorteile und Merkmale der Erfindung ergeben sich aus der folgenden Beschreibung von Ausführungsbeispielen.

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5000 der Firma Micromeritics, U.S.A., bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.%igen, wäßrigen Na₄P₂O₇-Lösung. Die Dispergierung der Proben wurde mittels Schnellrührer und Ultraschall vorgenommen.

Die gemessene Teilchenverteilung wird auf einem X-Y-Schreiber als Durchgangs-Summenkurve dargestellt (siehe z. B. Belger, P., Schweizerische Vereinigung der Lack- und Farben-Chemiker, XVII. FATIPEC-Kongreß, Lugano, 23. bis 28. September 1984), wobei auf der X-Achse der Teilchendurchmesser eines entsprechenden sphärischen Durchmessers und auf der Y-Achse der Anteil an Teilchen in Gew.% aufgetragen wird.

Die spezifische Oberfläche wurde nach BET entsprechend DIN 66132 gemessen. Die bis zur Gewichtskonstanz bei 105°C vorgetrocknete Probe wurde im Thermostaten bei 250°C unter Stickstoffspülung während 1 Stunde ausgeheizt. Die Messung erfolgte mit Stickstoff (N₂) als Meßgas unter Kühlung mit flüssigem Stickstoff.

Unter "Feststoffkonzentration" wird der Gehalt an atro (=absolut trocken) Calciumcarbonat in der wässerigen Aufschlämmung verstanden, ausgedrückt in Gewichtsprozent.

### Beispiel 1:

Zur Herstellung der Versuchsprodukte wurde ein handelsüblicher Marmor mit einem oberen Schnitt von 15 µm und einem mittleren Teilchendurchmesser von 2,5 µm als Ausgangsmaterial verwendet.

Mit diesem Ausgangsmaterial wurde eine wäßrige Aufschlämmung mit einer Feststoffkonzentration von 20 Gew.% hergestellt.

35 l dieser Aufschlämmung wurden in einer handelsüblichen vertikalen Perlmühle mit einem Mahlraumvolumen von 12 l feingemahlen.
- Umfangsgeschwindigkeit der Mahlscheiben:: 10 m/Sek.
- Mahlkugeln:: 18 kg Glas-Mahlkugeln mit einem Durchmesser von 1 mm
- Dosierung:: 1 l/Min.
- Mahldauer:: 15 Durchläufe

Es wurde kein Dispergiermittel zugesetzt.

Nach 5, 6, 7, 10 und 15 Durchläufen (abgekürzt als "Dl") wurden Proben abgezogen.

Die erreichten Kornfeinheiten sind in der folgenden Tabelle I zusammengestellt.

**Tabelle I**

| Versuche | Kornfeinheit Sedigraph 5000 | | | | Spez.Oberfläche BET/N₂ |
|---|---|---|---|---|---|
| | < 2 µm | < 1 µm | <0,5µm | <0,2µm | |
| 5 Dl | > 99 % | 94 % | 58 % | 18 % | 20,2 m²/g |
| 6 Dl | > 99 % | 97 % | 65 % | 24 % | 22,8 m²/g |
| 7 Dl | > 99 % | 98 % | 72 % | 26 % | 24,3 m²/g |
| 1O Dl | > 99 % | 98 % | 83 % | 31 % | 30,7 m²/g |
| 15 Dl | > 99 % | 99 % | 93 % | 51 % | 39,8 m²/g |

### Beispiel 2:

Mit dem in Beispiel 1 genannten Ausgangsmaterial wurde eine wäßrige Aufschlämmung mit einer Feststoffkonzentration von 18 Gew.% hergestellt und in der gleichen Perlmühle weitere Versuche durchgeführt.

Vom Beispiel 1 abweichende Versuchsbedingungen:
- Umfanggeschwindigkeit der Mahlscheiben:: 12 m/Sek.
- Mahldauer:: Nach 2 Durchläufen wurde 4 1/2 Std auf Kreislaufmahlung umgestellt.

Nach 2 Durchläufen sowie nach 1, 2, 4 und 4 1/2 Std. Kreislaufmahlung wurden Proben gezogen.

Die erreichten Kornfeinheiten sind in der folgenden Tabelle II zusammengestellt.

**Tabelle II**

| Versuche | Kornfeinheit Sedigraph 5000 | | | Spez.Oberfläche BET/N₂ |
|---|---|---|---|---|
| | <1µm | <0,5µm | <0,2µm | |
| 2 Dl | 61 % | 25 % | 4 % | 9,4 m²/g |
| + 1 h | 85 % | 52 % | 16 % | 17,2 m²/g |
| + 2 h | 90 % | 69 % | 25 % | 21,5 m²/g |
| + 3 h | 97 % | 79 % | 33 % | 27,2 m²/g |
| + 4 1/2h | 99 % | 90 % | 39 % | 29,0 m²/g |
| Dl = Durchläufe | | | | |

### Beispiel 3:

Zur Herstellung der Versuchsprodukte wurde ein handelsüblicher Dolomit mit einem oberen Schnitt von 12 µm und einem mittleren Teilchendurchmesser von 2,1 µm als Ausgangsmaterial verwendet. Mit diesem Ausgangsmaterial wurde eine wäßrige Aufschlämmung von 16 Gew.% hergestellt und in der gleichen Perlmühle ein weiterer Versuch durchgeführt.

Alle Mahlbedingungen sind mit dem Beispiel 1 identisch.

Nach 2, 5, 10 und 13 Durchläufen wurden Proben gezogen.

Die erreichten Kornfeinheiten sind in der folgenden Tabelle III zusammengestellt.

**Tabelle III**

| Versuche | Kornfeinheit Sedigraph 5000 | | | Spez.Oberfläche BET/N₂ |
|---|---|---|---|---|
| | <1µm | <0,5µm | <0,2µm | |
| 2 Dl | 62 % | 20 % | 1% | 8,5 m²/g |
| 5 Dl | 90 % | 55 % | 15 % | 16,0 m²/g |
| 10 Dl | 95 % | 82 % | 29 % | 24,2 m²/g |
| 13 Dl | 97 % | 91 % | 40 % | 27,1 m²/g |

### Beispiel 4:

Zur Herstellung der Versuchsprodukte wurde ein handelsüblicher Marmor mit einem oberen Schnitt von 10 µm und einem mittleren Teilchendurchmesser von 1,9 µm als Ausgangsmaterial verwendet. Mit diesem Ausgangsmaterial wurde eine wäßrige Ausschlämmung mit einer Feststoffkonzentration von 24 Gew.% hergestellt und in der gleichen Perlmühle ein weiterer Versuch durchgeführt.

Vom Beispiel 1 abweichende Versuchsbedingungen:
- Mahldauer:: 19 Durchläufe

Es wurden vor Mahlbeginn 0,6 Gew.% (atro/atro) Polysalz S (Na-Polyacrylat von BASF) als Dispergiermittel zugesetzt. "atro" bedeutet "absolut trocken".

Nach 2, 5, 10, 13 und 19 Durchläufen wurden Proben gezogen.

Die erreichten Kornfeinheiten sind in der folgenden Tabelle IV zusammengestellt.

**Tabelle IV**

| Versuche | Kornfeinheit Sedigraph 5000 | | | Spez.Oberfläche BET/N₂ |
|---|---|---|---|---|
| | <1µm | <0,5µm | <0,2µm | |
| 2 Dl | 72 % | 30 % | 9 % | 14,1 m²/g |
| 5 Dl | 94 % | 53 % | 15 % | 22,3 m²/g |
| 10 Dl | 100 % | 85 % | 39 % | 33,6 m²/g |
| 13 Dl | 100 % | 92 % | 51 % | 37,2 m²/g |
| 19 Dl | 100 % | 100 % | 73 % | 45,6 m²/g |

Die Verwendung von Dispergiermitteln läßt aufgrund niedriger Viskosität eine längere Mahldauer zu. Dadurch ist es möglich, spezifische Oberflächen von z.B. über 40 m²/g zu erzielen.

Die mit dem erfindungsgemäßen Verfahren hergestellten Verfahrensprodukte können vorteilhaft eingesetzt werden in Polymeren, insbesondere in Hart-PVC, in Dichtungsmassen, als halbverstärkende Füllstoffe für die Gummiindustrie, als Füllstoffe für Druckfarben, als Trägersubstanzen für Kosmetika und Arzneimittel und für Zigarettenpapier.

Weiterhin können die mit dem erfindungsgemäßen Verfahren hergestellten Verfahrensprodukte vorteilhaft eingesetzt werden für Holzlasuren zur Verbesserung der Wetterbeständigkeit, als Pigmente für Glanzpapiere und nach ihrer Beschichtung mit Fettsäuren oder deren Salzen (insbesondere Stearinsäure oder Calcium-stearat) als Füllstoffe für Plastisole.

## Patentansprüche

1. Verfahren zur Herstellung von natürlichen und/oder synthetischen Carbonaten, insbesondere Calciumcarbonaten, mit hoher spezifischer Oberfläche von über 20 m²/g nach BET/N₂, insbesondere von 20-50 m²/g nach BET/N₂ unter Verwendung einer an sich bekannten Mühle, insbesondere Rührwerkskugelmühle durch Naßvermahlung,
dadurch gekennzeichnet,
daß die Naßvermahlung im Kreislauf durch Rückführung des gesamten die Mühle verlassenden Produkts in die Mühle so oft durchgeführt wird, bis das Endprodukt mit der gewünschten spezifischen Oberfläche erreicht ist, und daß die Feststoffkonzentration während der gesamten Dauer der Naßvermahlung kleiner oder gleich 24 Gew.% beträgt und daß die Vermahlung gegebenenfalls in Anwesenheit von Dispergiermitteln durchgeführt wird.

2. Verfahren nach Anspruch 1,
dadurch gekennzeichnet,
daß die Feststoffkonzentration während der gesamten Dauer der Naßvermahlung 10 bis 24 Gew.% beträgt.

3. Verfahren nach einem oder mehreren der Ansprüche 1 bis 2,
dadurch gekennzeichnet,
daß die Feststoffkonzentration 12-22 Gew.% beträgt.

4. Verfahren nach einem oder mehreren der Ansprüche 1 bis 3,
dadurch gekennzeichnet,
daß die Dosierung bei einer Rührwerkskugelmühle mit 12 l Inhalt 1,0 l/min ± 0,05 l/min beträgt.

## Claims

1. Process for the preparation of natural and/or synthetic carbonates, especially calcium carbonates, having a high specific surface area of more than 20 m²/g according to BET/N₂, especially 20-50 m²/g according to BET/N₂, using a mill known per se, especially an agitator ball mill by wet grinding, characterised in that the wet grinding is effected in a cycle by returning to the mill the whole of the product leaving the mill as often as is necessary to obtain the end product with the desired specific surface area, and in that the solids concentration is less than or equal to 24% by weight throughout the entire period of wet grinding, and in that the grinding is optionally carried out in the presence of dispersing agents.

2. Process according to Claim 1,
characterised in that the solids concentration is from 10 to 24% by weight throughout the entire period of wet grinding.

3. Process according to one or more of Claims 1 and 2, characterised in that the solids concentration is from 12 to 22% by weight.

4. Process according to one or more of Claims 1 to 3, characterised in that the metering rate in the case of an agitator ball mill having a capacity of 12 l is 1.0 l/min ± 0.05 l/min.

## Revendications

1. Procédé pour la préparation de carbonates naturels et/ou synthétiques, en particulier de carbonates de calcium, avec de grandes surfaces spécifiques de plus de 20 m²/g selon BET/N₂, en particulier de 20 à 50 m²/g selon BET/N₂, utilisant un broyeur connu en soi, en particulier un broyeur à boulets agité, par broyage humide, caractérisé en ce que,
le broyage humide est réalisé en boucle par recyclage de la totalité du produit quittant le broyeur, dans le broyeur, jusqu'à ce que le produit final ayant la surface spécifique souhaitée soit atteint, et en ce que la concentration de matières solides, pendant la durée totale du broyage humide, est inférieure ou égale à 24 % en poids et le broyage est effectué éventuellement en présence d'agents dispersants.

2. Procédé selon la revendication 1, caractérisé en ce que la concentration de matières solides, pendant la durée totale du broyage humide, vaut de 10 à 24 % en poids.

3. Procédé selon une ou plusieurs des revendications 1 à 2, caractérisé en ce que la concentration de matières solides vaut de 12 à 22 % en poids.

4. Procédé selon une ou plusieurs des revendications 1 à 3, caractérisé en ce que le dosage, dans un broyeur à boulets agité, avec un contenu de 12 l, vaut 1,0 l/min ± 0,05 l/min.
